(19) Europäisches Patentamt
European Patent Office
Office européen des brevets

(11) Veröffentlichungsnummer: **0 027 430**
**B1**

(12) # EUROPÄISCHE PATENTSCHRIFT

(45) Veröffentlichungstag der Patentschrift: **08.06.83**

(51) Int. Cl.³: **G 03 C 5/54,** G 03 C 1/90, C 08 F 289/00

(21) Anmeldenummer: **80810309.7**

(22) Anmeldetag: **06.10.80**

(54) **Photographisches Material mit einer Trennschicht aus einem Pfropfcopolymer.**

(30) Priorität: **12.10.79 GB 7935519**

(43) Veröffentlichungstag der Anmeldung: **22.04.81 Patentblatt 81/16**

(45) Bekanntmachung des Hinweises auf die Patenterteilung: **08.06.83 Patentblatt 83/23**

(84) Benannte Vertragsstaaten: **BE CH DE FR GB IT LI**

(56) Entgegenhaltungen:
**BE-A-537196**
**BE-A-537790**
**FR-A-2407495**
**GB-A-1412131**

**Polymer Science USSR, vol. 10 (1968), Pergamon Press: Oxford, GB Khisma Tullina *et al.*: „Synthesis and study of graft copolymers of gelatine", S. 416-422.**

(73) Patentinhaber: **CIBA-GEIGY AG, Patentabteilung Postfach, CH-4002 Basel (CH)**

(72) Erfinder: **Wright, Peter John, 61 Wanstead Park Road, Ilford, Essex (GB)**

**EP 0 027 430 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Photographisches Material mit einer Trennschicht aus einem Propfcopolymer

Die vorliegende Erfindung betrifft ein photographisches Material, welches eine Trennschicht enthält.

Photographische Materialien mit Trennschichten sind wohlbekannt und wurden seit vielen Jahren in Verfahren wie Photomontage, Siebdruck und Schutzlackierung zum Ätzen von Heliogravürezylindern benutzt. Solche Materialien enthalten üblicherweise einen dimensionsstabilen Zwischenträger, eine Trennschicht, einen hydrophoben Träger und eine Silberhalogenidemulsionsschicht. Nach der Belichtung und Entwicklung ist im allgemeinen ein weiterer Vorgang erforderlich, um den die photographische Abbildung tragenden Träger vom Zwischenträger abzutrennen. Die Trennschichten sollen zwei mindestens teilweise hydrophobe Schichten, Zwischenträger und Träger, zusammenhalten.

In den letzten Jahren wurden jedoch verschiedene Diffusionstransferverfahren beschrieben, nach denen das zu belichtende photographische Material mindestens eine Silberhalogenidemulsionsschicht, eine Schicht, in welcher durch bildweise Diffusion einer oder mehrerer Substanzen aus der (den) Silberhalogenidemulsionsschicht(en) ein Bild entsteht, und einen Träger enthält. Vielfach ist dabei die Gegenwart einer Trennschicht zwischen der (den) Silberhalogenidemulsionsschicht(en) und der Bildschicht erforderlich. Nach dem Übergang der diffundierenden Substanz aus der (den) Silberhalogenidschicht (en) in die Bildschicht wird der silberhalogenidhaltige Teil des photographischen Materials an der Trennschicht von der Bildschicht und der Unterlage abgetrennt. Der Trenneffekt wird zweckmässigerweise während der Verarbeitung des photographischen Materials bewirkt.

Ein derartiges photographisches Material, das mindestens eine Silberhalogenidemulsionsschicht, eine Trennschicht, eine Bildschicht und einen Träger enthält, ist in der britischen Patentschrift Nr. 1362017 und der britischen Patentanmeldung Nr. 2007378A beschrieben. Im ersteren Fall erfolgt die Verarbeitung unter alkalischen Bedingungen, wobei Farbstoffe aus der Silberhalogenidschicht in die Bildschicht diffundieren. Im zweiten Fall findet die Verarbeitung unter sauren Bedingungen statt, wobei eine bildfarbstoffmodifizierende/silberhalogenidentwickelnde Verbindung (*dymodev: dye-modifying/developing* = farbstoffmodifizierend/entwickelnd) aus der Silberhalogenidschicht in die Bildschicht diffundiert. Ein diesen Anforderungen genügendes photographisches Material, das eine Trennschicht enthält, muss einerseits eine sehr gute Trockenhaftung aufweisen, damit es nicht zu einer vorzeitigen Abtrennung kommt; andererseits soll es eine mässige Nasshaftung besitzen, die jedoch nicht so stark ist, dass sich das Material nach Verarbeitung während eines vorgegebenen Zeitraums in wässerigen Lösungen nicht trennt. Die Diffusion der diffundierbaren Substanzen muss natürlich vor der Trennung des Materials vollständig erfolgt sein. Zudem ist es notwendig, dass die Trennschicht für die diffundierbaren Substanzen unter den entsprechenden sauren oder alkalischen Bedingungen durchlässig ist. Es hat sich als schwierig erwiesen, eine Trennschicht zu finden, welche alle diese Erfordernisse erfüllt und insbesondere eine ausreichende Nasshaftung aufweist, um die Diffusion der diffundierbaren Substanzen vollständig zu ermöglichen, aber die trotzdem ihre Haftung verlieren, wenn das Material mit wässerigen Verarbeitungslösungen behandelt wird.

Aus BE-A Nr. 537790 ist bekannt, Propfcopolymere, hergestellt aus 60-100 Gew.% Proteinen wie Gelatine oder acylierter Gelatine und 0-40 Gewichtsprozent eines oder mehreren ungesättigter Monomorer wie Vinyl- oder Acrylderivate, in z.B. Silberhalogenidemulsionsschichten oder Substrierschichten photographischer Materialien zu verwenden. Es wurde nun gefunden, dass gewisse Pfropfcopolymere auf Gelatinebasis sich auch gut als Trennschichten in photographischen Materialien, insbesondere für photographische Diffusionstransfermaterialien, eignen.

Gegenstand vorliegender Erfindung ist somit ein photographisches Material, das mindestens eine lichtempfindliche Schicht, eine Bildschicht, in welcher nach der Belichtung und Verarbeitung ein Bild durch bildweise Diffusion einer oder mehrerer Substanzen aus der (den) lichtempfindlichen Schicht(en) oder einer damit in Verbindung stehenden Schicht entsteht, einen Träger und zwischen der (den) lichtempfindlichen Schicht(en) und der Bildschicht eine Trennschicht aus einem Pfropfcopolymeren aus acylierter Gelatine und äthylenisch ungesättigten Monomeren enthält, dadurch gekennzeichnet, dass die Propfcopolymeren in der Trennschicht aus praktisch vollständig mit Phthalsäure-, Bernsteinsäure- oder Glutarsäureanhydrid oder einem Derivat davon, umgesetzter Gelatine und einem Monomeren eines Vinylester, Vinyläthers, Acrylesters, Acryläthers, Methacrylesters oder Methacryläthers oder eines Gemisches von diesen besteht, wobei das Gewichtsverhältnis von umgesetzter Gelatine zu Monomer im Pfropfcopolymeren zwischen 1 Teil Gelatine zu 0,25 Teilen Monomer und 1 Teil Gelatine zu 1,5 Teilen Monomer liegt, und wobei gegebenenfalls im photogrpahischen Material weitere Schichten zwischen der untersten lichtempfindlichen Schicht und der Bildschicht vorliegen, und wobei sich besagte Trennschicht zwischen zwei Gelatineschichten befindet.

Geeignete lichtempfindliche Schichten wie auch Bildschichten enthalten Gelatine. Vorzugsweise enthalten sämtliche Schichten im Material, ausser dem Träger, Gelatine.

Vorzugsweise ist die lichtempfindliche Schicht eine Gelatinesilberhalogenidemulsionsschicht.

Unter einer mit der lichtempfindlichen Schicht in Verbindung stehenden Schicht versteht man eine solche, die genügend nahe der lichtempfindlichen Schicht ist, um bildweise diffundierende Substanzen aus der lichtempfindlichen Schicht zu empfangen, und die wiederum diffundierbare Substanzen bildweise freisetzen.

Sehr zahlreiche Diffusionstransferverfahren wurden vorgeschlagen und zum Teil kommerziell verwertet, bei denen das erfindungsgemässe, eine Trennschicht enthaltende photographische Material einsetzbar wäre. Bei einigen Diffusionstransferverfahren wird ein Farbstoff durch Farbentwicklung aus einer Silberhalogenidemulsionsschicht freigesetzt. Er gelangt durch eine Trennschicht hindurch in eine Bildempfangsschicht. Ein solches Verfahren ist beispielsweise in der britischen Patentschrift Nr. 1187502 beschrieben.

Die britische Patentanmeldung Nr. 2017950 beschreibt ein weiteres Farbstoffdiffusionsverfahren. In diesem Fall wird eine Farbstoffazobrücke unter Freisetzung eines diffundierbaren Farbstoffs gespalten. Bei anderen Verfahren verwendet man einen sogenannten Farbstoffentwickler. An den Stellen, wo das Silberhalogenid belichtet wurde, reduziert der Farbstoffentwickler das belichtete Silberhalogenid und wird dabei selbst dort festgehalten, während der Farbstoffentwickler an den unbelichteten Stellen unter der Einwirkung eines alkalischen Mediums in eine Emfangsschicht diffundiert. Ein solches Verfahren ist in der US Patentschrift Nr. 3362819 beschrieben.

Gegebenenfalls zwischen der untersten Silberhalogenidemulsionsschicht und der Bildschicht vorhandene Schichten sind beispielsweise opakmachende Schichten und lichtreflektierende Schichten.

Die Trennwirkung der Trennschicht im erfindungsgemässen photographischen Material besteht in der Aufhebung der Haftung an der Grenzfläche zwischen der Trennschicht und einer der beiden Schichten, die die Trennschicht berühren. Nach erfolgter Trennung befindet sich die Trennschicht vollständig auf einer Seite der beiden Teile, in die sich das Material teilt, d.h. den den Träger und die Bildschicht enthaldenten Teil und den die Silberhalogenidemulsionsschicht(en) enthaltenden Teil. Die erfindungsgemäss verwendbare Trennschicht arbeitet somit auf andere Weise als die gemäss der britischen Patentschrift Nr. 1362017 verwendeten Trennschichten. Die dort vorgeschlagenen Trennschichten sind meist wasserlöslich oder zumindest durch Wasser aufweichbar. In der Praxis führt die Verwendung solcher Schichten zu Schwierigkeiten, da gelöstes und teilweise gelöstes Kolloid in das Verarbeitungsbad und auf das verarbeite, abgetrennte photographische Material gelangt. In der britischen Patentanmeldung Nr. 2007378 wird die Verwendung phthalierter Gelatine allein als Trennschicht beschrieben. In der Praxis hat sich jedoch gezeigt, dass phthalierte Gelatine zwar als Trennschicht verwendet werden kann, aber keine besonders zufriedenstellende Ergebnisse liefert, da diese Trennschichten sowohl niedrige Trockenhaftung als auch niedrige Nasshaftung aufweisen. Dies wird in dem beigefügten Beispiel gesagt.

Gelatineschichten in photographischen Materialien haften wegen der durch den Härterzusatz in den Giesszusammensetzungen bewirkten Vernetzung fest aneinander. Man nimmt an, dass die Vernetzung durch die in der Gelatine vorhandenen primären Aminogruppen erfolgt. Es ist deshalb von Bedeutung, sämtliche primäre Aminogruppen in der erfindungsgemäss in der Trennfläche verwendeten Gelatine dadurch zu blockieren, dass man die Gelatine vollständig mit einem Glutarsäure-, Phthalsäure- oder vorzugsweise mit einem Bernsteinsäureanhydrid umsetzt. Die Gegenwart der Monomere im Pfropfpolymer fördert die gute Trockenhaftung zwischen der Trennschicht und den Gelatineschichten. Ihre Gegenwart bewirkt ferner eine gewisse Nasshaftung, doch wird nach der Absorption einer bestimmten Menge Verarbeitungsflüssigkeit durch die Trennschicht die Haftung zwischen einer der Gelatineschichten und der Trennschicht so stark vermindert, dass sich diese leicht trennen lassen.

Synthetische Polymerschichten lassen sich normalerweise nicht als Trennschichten verwenden, da sie keine Verarbeitungslösung absorbieren und keine ungehemmte Diffusion der diffundierbaren Substanzen durch sie hindurch gestatten. Zudem wäre es sehr schwierig, Polymere zu giessen, da sie beim Abkühlen nicht gelieren. Die in den erfindungsgemässen Trennschichten zu verwendenden Pfropfpolymere lassen sich dagegen als wässerige Giesszusammensetzungen in ähnlicher Weise wie Gelatine giessen. Sie gelieren beim Abkühlen und absorbieren die Verarbeitungsflüssigkeit ohne weiteres, jedoch ohne übermässige Quellung, was die Aufhebung der Haftung fördert. Ferner diffundieren die diffundierbaren Substanzen ohne Schwierigkeiten durch eine solche Trennschicht.

Der Inhalt der neben der Trennschicht gegossenen Gelatineschichten bestimmt in gewissem Grade, an welcher dieser Schichten die Aufhebung der Haftung erfolgen wird. Ist beispielsweise eine der Schichten eine Gelatinesilberhalogenidemulsionsschicht, so ist es höchst wahrscheinlich, dass die Aufhebung der Haftung an der Grenzfläche zwischen der Gelatinesilberhalogenidemulsionsschicht und der Trennschicht stattfinden wird.

Ist die Gelatineschicht auf dem Silberhalogenidemulsionsteil des Materials so beschaffen, dass die Trennschicht bei der Trennung am Bildteil des Materials verbleibt, so ist es möglich, die Trennschicht als gewöhnliche Schicht im Material zu verwenden, zum Beispiel als eine lichtreflektierende Schicht, Zeitkontrollschicht oder Abfangschicht, je nach weiteren Bestandteilen in dieser Schicht.

Bei Verwendung der wie oben definierten Pfropfpolymeren als Trennschicht ist es jedoch möglich, äusserst dünne transparente Schichten einer Dicke von z.B. 0,5 μ herzustellen. Derartige Schichten sind an dem Teil des photographischen Materials, wo sie gebunden bleiben, unsichtbar.

Die zur Herstellung der modifizierten Gelatine verwendeten Dicarbonsäureanhydride können

wie in den nachfolgenden Formeln gezeigt substituiert sein: Bernsteinsäureanhydrid

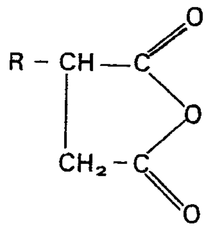

(I)

Phthalsäureanhydrid

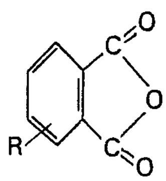

(II)

Glutarsäureanhydrid

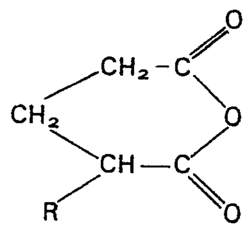

(III)

wobei in den drei obigen Formeln R Wasserstoff, Alkyl, Halogen oder $-SO_3M$ und M Wasserstoff oder ein Alkalimetallkation bedeuten.

Bevorzugte Alkylgruppen enthalten 1 bis 4 Kohlenstoffatome. Geeignete Reste sind Methyl, Äthyl, Propyl oder Butyl. Methyl und Äthyl werden bevorzugt. Als Halogen eignen sich Fluor, Chlor oder Brom. Vorzugsweise verwendet man Chlor oder Brom. M ist Wasserstoff oder ein Alkalimetallkation wie $Na^{\oplus}$ oder $K^{\oplus}$. $Na^{\oplus}$ wird bevorzugt.

Die Gelatine lässt sich durch Anwendung der Säureanhydride nach der Methode von Yutzy u.a., US Patentschrift Nr. 2525753, oder Habeeb u.a., „Biochimica et Biophysica acta", *29*, 587 (1958) modifizieren.

Zur Herstellung der in der erfindungsgemässen Trennschicht zu verwendenden Pfropfcopolymeren besonders geeignete Monomere sind:

Vinylester der Formel $CH_2{=}CR_1{-}O\overset{\overset{O}{\|}}{C}{-}R_2$

Vinyläther der Formel $CH_2{=}CR_1{-}OR_2$

Acrylester, oder

Methacrylester der Formel $CH_2{=}CR_1\overset{\overset{O}{\|}}{C}{-}OR_2$,

worin $R_1$ Wasserstoff oder Methyl und $R_2$ Alkyl mit 1 bis 4 Kohlenstofftomen oder einen aromatischen Ring bedeuten.

In geeigneten Monomeren bedeutet $R_2$ z.B. Methyl, Äthyl, n-Propyl, n-Butyl oder Phenyl.

n-Butylacrylat (nBA), n-Butylmethacrylat (nBMA), Vinylacetat und Vinylbenzoat werden als Monomere besonders bevorzugt.

Die Glasumwandlungstemperatur (Tg) des Homopolymeren der erfindungsgemäss verwendeten Monomeren bestimmt in gewissem Umfang die Nasshaftfähigkeiten der Pfropfpolymeren. Allgemein gilt, dass die Haftung um so grösser ist, je niedriger die Tg liegt. Beispielsweise weist Polybutylacrylat eine Tg von −54° C auf, während Polyvinylacetat eine Tg von 32° C besitzt. Im Beispiel wird dargelegt, dass n-Butylacrylat enthaltende Pfropfpolymere eine stärkere Nasshaftung aufweisen als Vinylacetat enthaltende Pfropfpolymere. Die erforderliche Nasshaftung lässt sich also durch geeignete Wahl der Monomeren oder eines Monomerengemischs erreichen. Die Verwendung von Monomeren mit einer Tg über 40° C ist nicht ratsam, da die daraus erhältlichen Propfpolymere zu Sprödigkeit neigen.

Bei der Herstellung der Propfcopolymeren lassen sich sämtliche üblichen Initiatoren verwenden, zum Beispiel:

2,2'-Azobis-(2-methylpropionitril), 4,4'-Azobis-(4-cyanvaleriansäure), Kaliumpersulfat und Ammoniumpersulfat.

Die in den Beispielen zur Herstellung der Pfropfcopolymeren verwendeten modifizierten Gelatinen wurden wie folgt hergestellt (Teile und Prozente sind dabei Gewichtsteile und Gewichtsprozente):

1) *Herstellung phthalierter Gelatine*

In einem mit Rührer, Thermometer, pH-Messelektroden und Tropftrichter versehenen Kolben löst man 150 g Gelatine in 1,5 l destilliertem Wasser. Der Kolben steht in einem auf 40° C gehaltenen Wasserbad. Der pH-Wert wird mit 10%iger Natronlauge auf 9,0 eingestellt. Dann gibt man 23 g in möglichst wenig Aceton gelöstes Phthalsäureanhydrid im Verlauf von 25 min aus dem Tropftrichter hinzu. Über diesen ganzen Zeitraum hinweg wird der pH-Wert durch Zusatz von 10%iger Natronlauge auf 8,5 bis 9,5 gehalten. Nach beendeter Zugabe rührt man die Lösung noch 40 min bei 40° C, überführt sie in ein Dialysegerät und dialysiert 48 h bei 35° C.

2) *Herstellung succinylierter Gelatine*

Man löst 300 g Gelatine in 3 l destilliertem Wasser, versetzt mit 30 g in 160 ml Aceton gelöstem Bernsteinsäureanhydrid in genau der gleichen Weise wie bei der obigen Herstellungsvorschrift und reinigt wiederum durch Dialyse.

Zum Nachweis, dass sich praktisch sämtliche freien $NH_2$-Gruppen in der Gelatine mit den Säureanhydriden umgesetzt haben, wird folgender Test angewendet.

Gleichzeitig mit nichtumgesetzter Gelatine zum Vergleich werden auf einem photographischen Träger Güsse sowohl der succinylierten als auch der phthalierten Gelatine hergestellt. Zu je 100 ml 6 gew.%iger Giesslösung gibt man 0,5 ml 1%ige Formaldehydlösung und 1,5 ml 6 gew.%ige wässerige Saponinlösung. Die Güsse werden dann bei 50° C und 70% relativer Feuchte 24 h inkubiert.

| | Unmodifizierte Gelatine | Succinylierte Gelatine | Phthalierte Gelatine |
|---|---|---|---|
| Schmelzpunkt<br>Prozent Quellung | 100 °C<br>ca. 340 | ≈34 °C<br>ca. 1100 | ≈34 °C<br>ca. 1100 |

Dies zeigt, dass die modifizierten Gelatinen durch die Formaldehydlösung im wesentlichen nicht gehärtet werden und dass deshalb praktisch keine freien $-NH_2$-Gruppen darin vorlagen.

Die nachfolgenden Herstellungsvorschriften sollen die Herstellung der in der erfindungsgemässen Trennschicht verwendeten Pfropfcopolymeren veranschaulichen.

*Herstellung*

In einem mit Rührer, Thermometer, Rückflusskühler und Stickstoffein- und -auslass versehenen Kolben löst man 35 g succinylierte Gelatine in 475 ml destilliertem Wasser. Man gibt 25 ml N-Methylpyrrolidin hinzu und erhöht die Temperatur durch Einstellen des Kolbens in ein Wasserbad auf 75° C. Dann leitet man 30 min lang Stickstoff hindurch. 1,4 g 4,4'-Azobis-(4-cyanvaleriansäure) und 2 min danach 50 g n-Butylacrylat werden dazugegeben. Dann rührt man 1,5 h bei 75° C unter Stickstoff. Das Pfropfcopolymer wird dann abfiltriert und zur Entfernung von nichtumgesetztem Monomer und Initiator 48 h lang dialysiert. Dies ist das Pfropfpolymer 1.

Die Herstellung weiterer Polymere erfolgt in ähnlicher Weise unter Verwendung der gleichen Menge succinylierter Gelatine, aber mit anderen Monomeren. Die Mengen sind in der nachfolgenden Tabelle angegeben.

Bei der Herstellung des Propfpolymeren 11 werden 35 g phthalierte Gelatine und 50 g Vinylacetat verwendet.

*Tabelle 1*

| Nr. | Pfropfpolymer | Gewichtsverhältnis |
|---|---|---|
| 1 | succinylierte Gelatine / n-Butylacrylat | 1 : 1,44 |
| 2 | succinylierte Gelatine / n-Butylacrylat | 1 : 1 |
| 3 | succinylierte Gelatine / n-Butylmethacrylat | 1 : 1,44 |
| 4 | succinylierte Gelatine / n-Butylmethacrylat | 1 : 1 |
| 5 | succinylierte Gelatine / Vinylacetat | 1 : 1,44 |
| 6 | succinylierte Gelatine / Vinylacetat | 1 : 1 |
| 7 | succinylierte Gelatine / Vinylacetat | 1 : 0,5 |
| 8 | succinylierte Gelatine / Vinylbenzoat | 1 : 1,44 |
| 9 | succinylierte Gelatine / Vinylbenzoat | 1 : 1 |
| 10 | succinylierte Gelatine / Vinylbenzoat | 1 : 0,5 |
| 11 | phthalierte Gelatine / Vinylacetat | 1 : 1,44 |

Der Gehalt an Homopolymer wird durch eine 24 h dauernde Extraktion mit siedendem Aceton bestimmt. Den Gehalt an Propfpolymer bestimmt man durch saure Hydrolyse oder enzymatischen Abbau.

*Tabelle 2*

| Pfropfpolymer Nr. | Gesamtpolymerisat % | Homopolymer % | Gepfropft % |
|---|---|---|---|
| 1 | 59 | 29 | 30 |
| 2 | 50 | 21 | 29 |
| 3 | 58,5 | 42,7 | 15,8 |
| 4 | 49,9 | 39,7 | 10,2 |
| 5 | 58,6 | 22,22 | 36,4 |
| 6 | 48,8 | 19,4 | 29,4 |
| 7 | 25,5 | 0,00 | 25,5 |
| 8 | 45,0 | 17,0 | 28,0 |
| 9 | 37,97 | 12,95 | 25,02 |
| 10 | 33,53 | 9,18 | 24,35 |
| 11 | 57,2 | 20,1 | 37,1 |

*Beispiel*

Ein Empfangselement wird hergestellt, indem man auf einen substrierten Celluloseacetatträger eine Beizzusammensetzung giesst, die aus 70 ml 10%iger wässeriger Gelatine, 40 ml 7,5%iger wässeriger Lösung von Copoly(styrol/N-maleinimidopropyl-N,N-dibutyl-N-methylammonium-p-toluolsulfonat), 2 ml 30 gew.%igem wässerigen Formaldehyd und 4 ml 6 gew.%iger wässeriger Saponinlösung besteht. Das Giessgewicht beträgt 60 mg/dm². Darüber giesst man das Pfropfpolymer 7 als Trennschicht mit einem Giessgewicht von 100 mg/dm².

γ-Benzoyl-γ-(3-octadecylcarbonylphenylthio)-3,5-dicarboxyacetanilid wird als Gelbfarbkuppler in eine Gelatinesilberbromidjodidgiessemulsion eingearbeitet, welche pro Quadratdezimeter 18 mg Kuppler, 20 mg Silber und 60 mg Gelatine enthält. Diese Schicht wird über die Trennschicht gegossen.

Gussproben werden unter einem Negativ belichtet und 5 min bei 75° C mit einem Farbentwickler der folgenden Zusammensetzung entwickelt:

| | | |
|---|---|---|
| Benzylalkohol | 10,0 | $cm^3$ |
| Ascorbinsäure | 0,2 | g |
| Kaliumbromid | 0,7 | g |
| Natriumcarbonat·$H_2O$ | 20,0 | g |
| Natriumhydroxyd | 2,0 | g |
| 4-Amino-N-äthyl-N-(β-hydroxyäthyl)anilin | 10,0 | g |
| Wasser auf | 1 | l |

Die Trockenhaftung sowohl der Emulsionsschicht an der Trennschicht als der Trennschicht an der Beizschicht ist gut. Im Nasszustand lässt sich die Trennschicht leicht zusammen mit der Emulsionsschicht entfernen. Die nach der Messerabstreifmethode gemessene Haftfestigkeit beträgt 10 g/cm.

Der während der Entwicklung durch Reaktion des Kupplers mit dem oxydierten Entwickler gebildete lösliche Säurefarbstoff wird auf die Beizschicht übertragen und dort in befriedigendem Ausmass gebeizt.

Das Empfangsbild ist von guter Qualität, und der Schärfeverlust übersteigt nicht die Voraussage nach dem Diffusionsweg.

*Haftprüfung*

(Messerabstreifmethode auf Grundlage des Hesiometers, siehe die Literaturstelle „IX. Fatipec Congress", 1968.)

*Tabelle 3*

| Nr. | Zusammensetzung der Trennschicht (Pfropfpolymer) | Gewichtsverhältnis | Nasshaftung | Trockenhaftung |
|---|---|---|---|---|
| 1 | succinylierte Gelatine / n-Butylacrylat | 1 : 1,44 | 30 g/cm | + |
| 2 | succinylierte Gelatine / n-Butylacrylat | 1 : 1 | 20 | + |
| 3 | succinylierte Gelatine / n-Butylmethacrylat | 1 : 1,44 | 4,6 | – |
| 4 | succinylierte Gelatine / n-Butylmethacrylat | 1 : 1 | 10 | + |
| 5 | succinylierte Gelatine / Vinylacetat | 1 : 1,44 | 11,5 | + |
| 6 | succinylierte Gelatine / Vinylacetat | 1 : 1 | 14 | + |
| 7 | succinylierte Gelatine / Vinylacetat | 1 : 0,5 | 5 | + |
| 8 | succinylierte Gelatine / Vinylbenzoat | 1 : 1,44 | 7 | – |
| 9 | succinylierte Gelatine / Vinylbenzoat | 1 : 1 | 6 | + |
| 10 | succinylierte Gelatine / Vinylbenzoat | 1 : 0,5 | 4,6 | + |
| 11 | phthalierte Gelatine / Vinylacetat | 1 : 1,44 | 12 | + |
| 12 | succinylierte Gelatine / (zum Vergleich) | – | 0 | – |
| 13 | phthalierte Gelatine / (zum Vergleich) | – | 0 | – |

*Zeichenerklärung:*

–: Trockenhaftung versagt beim Bandabziehtest
+: Gute Trockenhaftung

(Trockenhaftungstest: mit dem Rasiermesser Schnitte in die Oberfläche einer Probe anbringen, Streifen eines darüber geklebten Klebebandes wegreissen.)

## Patentansprüche

1. Photographisches Material, das mindestens eine lichtempfindliche Schicht, eine Bildschicht, in welcher nach der Belichtung und Verarbeitung ein Bild durch bildweise Diffusion einer oder mehrerer Substanzen aus der (den) lichtempfindlichen Schicht(en) oder einer damit in Verbindung stehenden Schicht entsteht, einen Träger und zwischen der (den) lichtempfindlichen Schicht(en) und dieser Bildschicht eine Trennschicht aus einem Pfropfcopolymeren aus acylierter Gelatine und äthylenisch ungesättigten Monomeren enthält, dadurch gekennzeichnet, dass die Pfropfcopolymeren in der Trennschicht aus praktisch vollständig mit Phthalsäure-, Bernsteinsäure- oder Glutarsäureanhydrid oder einem Derivat davon, umgesetzter Gelatine und einem Monomeren

eines Vinylesters, Vinyläthers, Acrylesters, Acryläthers, Methacrylesters oder Methacryläthers oder eines Gemisches von diesen besteht, wobei das Gewichtsverhältnis von umgesetzter Gelatine zu Monomer im Pfropfcopolymeren zwischen 1 Teil Gelatine zu 0,25 Teilen Monomer und 1 Teil Gelatine zu 1,5 Teilen Monomer liegt, und wobei gegebenenfalls im photographischen Material weitere Schichten zwischen der untersten lichtempfindlichen Schicht und der Bildschicht vorliegen, und wobei sich besagte Trennschicht zwischen zwei Gelatineschichten befindet.

2. Photographisches Material nach Anspruch 1, dadurch gekennzeichnet, dass die lichtempfindliche(n) Schicht(en) Gelatineschichten sind.

3. Photographisches Material nach Anspruch 2, dadurch gekennzeichnet, dass als lichtempfindliche Schicht eine Gelatinesilberhalogenidemulsionsschicht vorliegt.

4. Photographisches Material nach einem der Ansprüche 1 bis 3, dadurch gekennzeichnet, dass die Derivate des Bernsteinsäureanhydrids der Formel

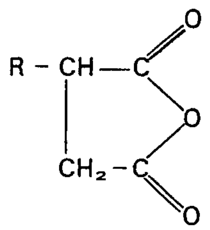

des Phthalsäureanhydrid der Formel

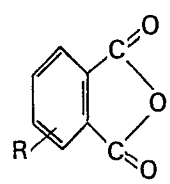

und des Glutarsäureanhydrids der Formel

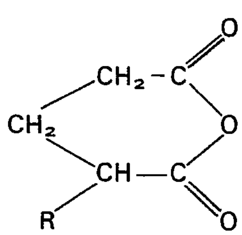

entsprechen, worin R Wasserstoff, Alkyl, Halogen oder $-SO_3M$ und M Wasserstoff oder ein Alkalimetall ist.

5. Photographisches Material nach Anspruch 4, dadurch gekennzeichnet, dass R Wasserstoff, Methyl, Äthyl, Chlor, Brom oder $-SO_3M$ und M Wasserstoff oder Natrium ist.

6. Photographisches Material nach einem der Ansprüche 1 bis 5, dadurch gekennzeichnet, dass das Monomer

ein Vinylester der Formel $CH_2=CR_1-O\overset{\overset{O}{\|}}{C}-R_2$,

ein Vinyläther der Formel $CH_2=CR_1-OR_2$,

ein Acrylester oder ein Methacrylester der Formel

$$CH_2=CR_1\overset{\overset{O}{\|}}{C}-OR_2$$

ist, worin $R_1$ Wasserstoff oder Methyl und $R_2$ Alkyl mit 1 bis 4 Kohlenstoffatomen oder einen aromatischen Ring bedeutet.

7. Photographisches Material nach Anspruch 6, dadurch gekennzeichnet, dass $R_2$ Methyl, Äthyl, n-Propyl, n-Butyl oder Phenyl ist.

8. Photographisches Material nach einem der Ansprüche 1 bis 7, dadurch gekennzeichnet, dass das Monomer n-Butylacrylat, n-Butylmethacrylat, Vinylacetat oder Vinylbenzoat ist.

## Claims

1. A photographic assembly which comprises at least one photosensitive layer and an image layer in which, after exposure and processing, an image is formed by an imagewise diffusion of a substance or substances from the photosensitive layer or layers or a layer in operative contact therewith and a support, there being present between the photosensitive layer or layers and the said image layer a stripping layer consisting of a graft copolymer of acylated gelatin and ethylenically unsaturated monomers, which graft copolymer in said stripping layer has been substantially fully reacted with phthalic anhydride, succinic anhydride or glutaric anhydride or a derivate thereof, and a monomer or a vinyl ester, a vinyl ether, an acrylic ester, an acrylic ether, a methacrylic ester or a methacrylic ether or a mixture thereof, the proportion of reacted gelatin to monomer in the graft copolymer being from 1 part of gelatin to 0.25 part of monomer by weight to 1 part of gelatin to 1.5 part of monomer by weight, there being optionally other layers present in the photographic assembly between the lowest photosensitive layer and the image layer, the said stripping layer being present between two gelatin based layers.

2. A photographic assembly according to claim 1, wherein the photosensitive layer or layers are gelatin layers.

3. A photographic assembly according to claim 2, wherein the photosensitive layer is a gelatine silver halide emulsion layer.

4. A photographic assembly according to any one of claims 1 to 3, wherein the derivative of the succinic anhydride has the formula:

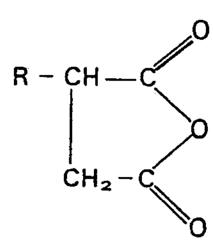

that of the phthalic anhydride has the formula:

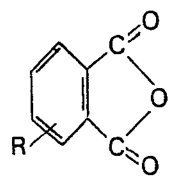

and that of the glutaric anhydride has the formula:

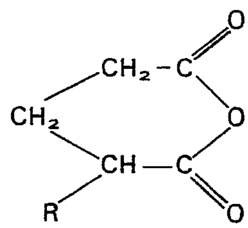

wherein R denotes hydrogen, alkyl, halogen or $-SO_3M$, and M is hydrogen or an alkali metal.

5. A photographic assembly according to claim 4, wherein R denotes hydrogen, methyl, ethyl, chlorine, bromine or $-SO_3M$, and M is a hydrogen or sodium ion.

6. A photographic assembly according to any one of claims 1 to 5, wherein the monomer is:

a vinylester of the formula $CH_2{=}CR_1-O\overset{\overset{O}{\|}}{C}-R_2$,

a vinylether of the formula $CH_2{=}CR_1-OR_2$, and

an acrylic ester, or

a methacrylic ester of the formula

$CH_2{=}CR_1\overset{\overset{O}{\|}}{C}-OR_2$,

wherein $R_1$ is hydrogen or methyl, and $R_2$ is alkyl having from 1 to 4 carbon atoms or an aromatic ring.

7. A photographic assembly according to claim 6, wherein $R_2$ is methyl, ethyl, n-propyl, n-butyl or phenyl.

8. A photographic assembly according to any one of claims 1 to 7, wherein the monomer is n-butylacrylate, n-butylmethacrylate, vinylacetate or vinylbenzoate.

**Revendications**

1. Matériau photographique qui comprend au moins une couche photosensible, une couche image dans laquelle, après l'exposition à la lumière et le traitement, se forme une image par diffusion selon une image d'une ou de plusieurs substances à partir de la ou des couches photosensibles, ou bien à partir d'une couche se trouvant en liaison avec celles-ci, un support et entre la ou les couches photosensibles et cette couche image, une couche de séparation en un copolymère greffé de gélatine acylée et de monomère éthyléniquement insaturé, caractérisé par le fait que les copolymères greffés dans la couche de séparation sont constitués pratiquement complètement avec de l'anhydride phtalique, de l'anhydride succinique ou de l'anhydride glutarique, ou bien un dérivé de ceux-ci, de gélatine transformée et d'un monomère d'un ester vinylique, d'un éther vinylique, d'un ester acrylique, d'un éther acrylique, d'un ester méthacrylique ou d'un éther méthacrylique ou bien d'un mélange de ces produits, le rapport pondéral de la gélatine transformée au monomère dans les copolymères greffés se situant entre une partie de gélatine pour 0,25 partie de monomère et une partie de gélatine pour 1,5 partie de monomère, et d'autres couches entre la couche photosensible la plus basse et la couche image existant éventuellement dans le matériau photographique, la couche de séparation en question se trouvant entre les deux couches de gélatine.

2. Matériau photographique selon la revendication 1, caractérisé par le fait que la ou les couches photosensibles sont des couches de gélatine.

3. Matériau photographique selon la revendication 2, caractérisé par le fait qu'une couche d'émulsion de gélatinohalogénure d'argent existe comme couche photosensible.

4. Matériau photographique selon l'une des revendications 1 à 3, caractérisé par le fait que les dérivés de l'anhydride succinique correspondent à la formule:

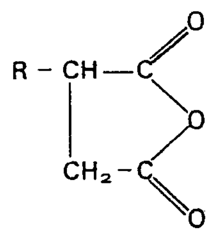

ceux de l'anhydride phtalique correspondent à la formule:

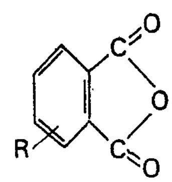

et ceux de l'anhydride glutarique correspondent à la formule:

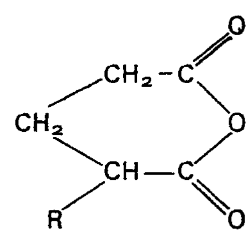

où R est de l'hydrogène, un groupe alkyle, halogéno ou $-SO_3M$, et M est de l'hydrogène ou un métal alcalin.

5. Matériau photographique selon la revendication 4, caractérisé par le fait que R est de l'hydrogène, un groupe méthyle, éthyle, du chlore, du brome ou bien $-SO_3M$, et M est de l'hydrogène ou le sodium.

6. Matériau photographique selon l'une des revendications 1 à 5, caractérisé par le fait que le monomère est un ester vinylique de formule:

$$\begin{array}{c}\phantom{CH_2=CR_1-O}\overset{O}{\overset{\|}{C}}\phantom{-R_2}\\[-4pt]\end{array}$$
$$CH_2=CR_1-O\overset{\overset{O}{\|}}{C}-R_2$$

un éther vinylique de formule: $CH_2=CR_1-OR_2$

un ester acrylique ou un ester méthacrylique de formule:

$$CH_2=CR_1\overset{\overset{O}{\|}}{C}-OR_2$$

où $R_1$ est de l'hydrogène ou un groupe méthyle, et $R_2$ est un groupe alkyle ayant 1 à 4 atomes de carbone ou bien un noyau aromatique.

7. Matériau photographique selon la revendication 6, caractérisé par le fait que $R_2$ est un groupe méthyle, éthyle, n-propyle, n-butyle ou phényle.

8. Matériau photographique selon l'une des revendications 1 à 7, caractérisé par le fait que le monomère est l'acrylate de n-butyle, le méthacrylate de n-butyle, l'acétate de vinyle ou le benzoate de vinyle.